# EUROPÄISCHE PATENTANMELDUNG

(11) **EP 4 776 084 A1**
(43) Veröffentlichungstag der Anmeldung: **15.07.2026**
(21) Anmeldenummer: 26150796.6
(22) Anmeldetag: 08.01.2026
(51) Int. Cl.: G05B 13/02

(54) **COMPUTER-IMPLEMENTIERTES VERFAHREN ZUR STEUERUNG ODER REGELUNG EINER SCHLAGENDEN UMFORMMASCHINE, COMPUTER-PROGRAMMPRODUKT, KONTROLLEINHEIT ZUR STEUERUNG ODER REGELUNG EINER SCHLAGENDEN UMFORMMASCHINE UND SCHLAGENDE UMFORMMASCHINE**

(30) Priorität: 08.01.2025 DE 102025100474
(71) Anmelder: Langenstein & Schemann GmbH, 96450 Coburg (DE)
(72) Erfinder: Barnickel, Harald, 96450 Coburg (DE)
(74) Vertreter: Meissner Bolte Nürnberg

(57) **Zusammenfassung**

Die zu Grunde liegende Erfindung betrifft insbesondere ein computer-implementiertes Verfahren zur Steuerung oder Regelung einer Schlagausführung eines Umformschlags im Betrieb einer schlagenden Umformmaschine (1) mittels einer Steuer- oder Regeleinheit. Das Verfahren umfasst a) Bereitstellen eines Ist-Datensatzes (D) mit Ist-Betriebsdaten der Umformmaschine (1), wobei die Ist-Betriebsdaten (D) einen Ist-Betriebszustand der Umformmaschine (1) zu einem Betriebspunkt bei oder unmittelbar nach Initiierung der Schlagausführung durch die Steuer- oder Regeleinheit (15) beschreiben; b) Übergabe des Ist-Datensatzes (D) als Eingabedaten (E) an ein trainiertes neuronales Netz (N), wobei das neuronale Netz (N) die Schlagausführung der Umformmaschine modelliert und aus den Eingabedaten (E) zumindest einen Soll-Datensatz (SD) mit Soll-Betriebsdaten als Ausgabedaten (A) erzeugt; c) Übergabe der Ausgabedaten (A) an die Steuer- oder Regeleinheit (15), und d) Steuern oder Regeln der weiteren Schlagausführung des Umformschlags durch die Steuer- oder Regeleinheit (15) anhand der Soll-Betriebsdaten des Soll-Datensatzes (SD).

## Beschreibung

Die zu Grunde liegende Erfindung betrifft ein Computer-implementiertes Verfahren zur Steuerung oder Regelung einer Schlagausführung eines Umformschlags im Betrieb einer schlagenden Umformmaschine, ein Computer-Programmprodukt, eine Kontrolleinheit zur Steuerung oder Regelung einer schlagenden Umformmaschine und eine Schlagende Umformmaschine.

Zum Umformen von metallischen Werkstücken bei der Kaltumformung oder bei der Warmumformung, beispielsweise von metallischen, schmiedbaren Werkstoffen, sind verschiedene schlagende Umformmaschinen bekannt (siehe beispielsweise VDI-Lexikon Band Produktionstechnik Verfahrenstechnik, Herausgeber: Hiersig, VDI-Verlag, 1995, Seiten 1107 bis 1113). Schlagende Umformmaschinen, wie Schmiedehämmer, weisen in der Regel wenigstens ein Bär mit einem oberen Umformwerkzeug auf, welcher von einem Antrieb oder Aktuator, z.B. einem Hydraulikzylinder oder einem elektrischen Linearantrieb oder -motor angetrieben und relativ zu einem unteren Umformwerkzeug bewegt wird. Zur Schlagausführung eines Umformschlags beschleunigt der Aktuator den Bären mit dem daran befestigten Umformwerkzeug ausgehend von einem oberen Umkehrpunkt, so dass im Bereich des unterem Umkehrpunkts ein Umformschlag ausgeführt werden kann.

Gemäß VDI-Lexikon "Produktionstechnik Verfahrenstechnik", Herausgeber Prof. Dr. Hiersig, VDI-Verlag, 1995, Seiten 1107 bis 1113 unterteilt man Schmiedehämmer in Schabottehämmer, diese wiederum unterteilt in Fallhämmer und Oberdruckhämmer, und Gegenschlaghämmer. Ein Schabottehammer umfasst als feststehenden Träger eine Schabotte (oder: einen Amboss) mit einem relativ zum Träger feststehenden Umformwerkzeug und als relativ zur Schabotte, in der Regel vertikal, bewegten Träger den Schlagbären oder kurz Bären mit einem Umformwerkzeug. Ein Gegenschlaghammer weist zwei gegeneinander und jeweils relativ zum Boden oder zum Hammergestell, vertikal oder auch waagrecht, bewegte Schlagbären mit jeweils daran befestigten Umformwerkzeugen auf. Die Antriebe für die Bären von Schmiedehämmern sind im Allgemeinen hydraulisch, pneumatisch oder elektrisch.

Für das Umformergebnis sowie für die Umformqualität ist bei solchen schlagenden Umformmaschinen insbesondere von Bedeutung, ob für einen Umformschlag eine jeweils vorgegebene Geschwindigkeit oder Umformenergie des Umformwerkzeugs tatsächlich und zuverlässig erreicht werden kann. Die Umformgeschwindigkeit bzw. Umformenergie wird in der Regel als Soll-Geschwindigkeit oder Soll-Umformenergie vorgegeben. Mithin ist es wünschenswert, dass die tatsächlich erreichte Umformgeschwindigkeit oder Umformenergie bestmöglich mit der vorgegebenen Soll-Geschwindigkeit oder Soll-Umformenergie übereinstimmt, im Idealfall identisch zu jeweiligen Soll-Werten ist. Bei schlagenden Umformmaschinen sind durch Bär und Werkzeug(e) gegebene, erhebliche Massen zu beschleunigen, wobei in der Regel sehr hohe Umformenergien involviert sind. Insbesondere diese und auch andere Einflussfaktoren, wie Systemparameter und/oder Betriebsgrößen, stellen eine Herausforderung für eine genaue und wiederholbare Ansteuerung des Aktuators zur Beschleunigung des Werkzeugs auf die gewünschte Soll-Geschwindigkeit bzw. Soll-Umformenergie dar.

Ausgehend davon ist es eine Aufgabe der Erfindung eine verbesserte schlagende Umformmaschine anzugeben, mit welcher verbesserte Umformergebnisse erreicht werden können. Ferner sollen, bei analoger Zielsetzung, ein Verfahren, ein Computer-Programmprodukt und eine Kontrolleinheit zur Durchführung des Verfahrens angegeben werden.

Diese Aufgabe wird gelöst durch die unabhängigen Ansprüche. Ausgestaltungen ergeben sich aus den abhängigen Ansprüchen und der nachfolgenden Beschreibung.

Nach einer Ausgestaltung ist ein computer-implementiertes Verfahren zur Steuerung oder Regelung einer Schlagausführung eines Umformschlags im Betrieb einer schlagenden Umformmaschine vorgesehen. Bei der Schlagenden Umformmaschine kann es sich beispielsweise um einen Schmiedehammer, einen hydraulischen Hammer, Gesenkschmiedehammer, oder Schabottehammer handeln. Die Umformmaschine ist insbesondere eingerichtet zur schlagenden Umformung eines metallischen Werkstücks. Zur Steuerung/Regelung des Betriebs der Umformmaschine ist eine Steuer- oder Regeleinheit vorgesehen.

Eine verfahrensgemäße Ausgestaltung sieht die folgenden Schritte vor:
a) Bereitstellen eines Ist-Datensatzes mit Ist-Betriebsdaten der Umformmaschine, wobei die Ist-Betriebsdaten einen Ist-Betriebszustand der Umformmaschine zu einem Betriebspunkt bei oder unmittelbar nach Initiierung der Schlagausführung, d.h. bei oder unmittelbar nach Schlagauslösung, durch die Steuer- oder Regeleinheit beschreiben;
b) Übergabe des Ist-Datensatzes als Eingabedaten an ein trainiertes neuronales Netz, wobei das neuronale Netz
   - zumindest die Schlagausführung der Umformmaschine modelliert,
   - basierend auf einer Vielzahl von Trainingsdatensätzen trainiert ist, welche jeweils zumindest zu Betriebsdatentypen des Ist-Betriebsdatensatzes korrespondierende und aus Test- oder Regelbetrieb der oder einer Umformmaschine ermittelte Trainingsbetriebsdaten umfassen, und
   - dazu eingerichtet ist, aus den Eingabedaten zumindest einen Soll-Datensatz mit Soll-Betriebsdaten als Ausgabedaten zu erzeugen;
c) Übergabe der Ausgabedaten, d.h. des Soll-Datensatzes, an die Steuer- oder Regeleinheit, und,
d) Steuern oder Regeln der weiteren Schlagausführung des Umformschlags durch die Steuer- oder Regeleinheit anhand der Soll-Betriebsdaten des

Soll-Datensatzes bzw. basierend auf den Ausgabedaten.

Bei dem Verfahren werden die bei der Initiierung der Schlagausführung zu einem gegebenen Zeitpunkt vorliegenden Ist-Betriebsdaten verwendet zur Ermittlung von Soll-Betriebsdaten zur weiteren Steuerung der Schlagausführung. Das bedeutet insbesondere, dass die Ist-Betriebsdaten zur Schlagauslösung und ggf. anfänglichen Schlagauslösung an das neuronale Netz übergeben werden, welches daraus für die weitere Schlagausführung optimale Soll-Betriebsdaten ermittelt, die dann für die weitere Schlagausführung, insbesondere für die Bewegungssteuerung des Aktors an dem das Werkzeug bzw. Umformwerkzeug angebracht ist, verwendet werden. Mit anderen Worten werden die Soll-Betriebsdaten und entsprechende Steuerdaten von dem trainierten neuronalen Netz ermittelt und zur weiteren Schlagausführung zur Ausführung einer Umformoperation des Werkstücks verwendet. Vorzugsweise wird das Verfahren wiederholt und zyklisch bei jedem Umformzyklus ausgeführt. Unter einem Umformzyklus soll dabei, wie üblich, verstanden werden ein Betriebszyklus der schlagenden Umformmaschine umfassend Schlagauslösung, Bewegungssteuerung des Aktors, Schlagausführung mit Umformung, und Rückhub.

Die zu Grunde liegende Erfindung basiert auf der Erkenntnis, dass bei ansonsten gleich eingestellten Betriebsparametern bei einer schlagenden Umformmaschine unterschiedliche Umformgeschwindigkeiten/Umformenergien und damit unterschiedliche bzw. schwankende Umformergebnisse und unerwünschte Qualitätseinbußen auftreten können. Schwankungen im Umformergebnis können, so die Erkenntnis der Erfindung, zumindest in gewissem Rahmen, durch Betriebsparameter oder - bedingungen verursacht werden, die einer Messung oder Erfassung im Betrieb nicht oder nur schwer zugänglich sind.

So treten bei schlagenden Umformmaschinen aufgrund der vergleichsweise hohen bewegten Massen (Bär bzw. Gesenk mit Werkzeug oder Werkzeugen) im Zusammenhang der Umwandlung von kinetischer Energie in Umformenergie in einer kurzen Zeitspanne, z.B. innerhalb von ms, in der Regel durchaus erhebliche mechanische Schwingungen auf, z.B. Schwingungen des Gestells der Umformmaschine, Schwingungen in oder an Komponenten der Umformmaschine, Druckschwankungen im Hydraulikkreis bei einer hydraulisch betriebenen Umformmaschine usw.. Solche Schwingungen oder Schwankungen, so eine Erkenntnis der Erfindung, können bei kurz aufeinanderfolgenden Umformvorgängen zu Variationen im dynamischen Betriebsvariablen führen, beispielsweise zu Abweichungen zwischen der Soll-Geschwindigkeit und der tatsächlichen Geschwindigkeit des Werkzeugs. Zwar wäre es denkbar, die Umformfolge so festzulegen, dass aufeinanderfolgende Umformvorgängen durch eine Wartezeit getrennt sind, die so bemessen ist, dass die Schwingungen abgeklungen sind. Allerdings würde das den Durchsatz unerwünscht herabsetzen. Auch sich verändernde Maschinenparameter wie z.B. Öltemperatur, Speicherdruck, Verschleiß von Führungen usw. können auch Abweichungen der Soll-Geschwindigkeiten hervorrufen. Mithin gibt es durchaus eine Vielzahl an unterschiedlichen Einflussfaktoren, die eine genaue und wiederholbare Einstellung der Umformgeschwindigkeit bzw. der Umformenergie beeinflussen.

Die zu Grunde liegende Erfindung schlägt nun vor, ein auf künstlicher Intelligenz (KI) basierendes Verfahren Steuer-/Betriebsverfahren umzusetzen, mit dem einerseits unerwünschte Schwankungen in der Umformenergie/im Umformergebnis und andererseits auch schwer, bzw. wenn überhaupt, zu messende oder erfassbare Einflüsse und/oder eine Vielzahl unterschiedlicher Einflussfaktoren berücksichtigt werden können.

Ein konkretes Beispiel für schwer messbare oder greifbare Parameter sind durch Umformoperationen verursachte Schwingungen bei einer durch Schwingungsdämpfer gegen den Untergrund gedämpften Umformmaschine. Bei solchen Umformmaschinen ist es möglich, dass die bei Initiierung des Umformschlags auf Grund der Schwingungsdämpfung variierenden Schwingungslage die tatsächlich erreichte Umformgeschwindigkeit und damit das Umformergebnis unerwünscht beeinflussen kann. Das erfindungsgemäß vorgeschlagene KI-basierte Verfahren ist in der Lage, aus den tatsächlich gemessenen Ist-Betriebsparametern durch die Generierung entsprechender Soll-Betriebsparameter für die Steuerung/Regelung der Umformmaschine solche unerwünschten Schwingungseffekte zu beseitigen oder zumindest weitestgehend zu eliminieren. Analoges gilt für andere Einflussfaktoren.

Generell ist eine Erkenntnis der vorliegenden Erfindung, dass es mit der vorgeschlagenen KI-basierten Steuerung/Regelung, möglich ist, unerwünschte Einflüsse von üblicherweise nicht oder nicht einfach zu messenden Betriebsparametern und/oder -bedingungen im Wesentlichen komplett oder zumindest weitgehend zu eliminieren. Wie erwähnt kommen neben den genannten Dämpfungs-Schwingungen bei schwingungsgedämpften Umformmaschinen auch Einflussgrößen wie Schwingungen oder Schwankungen im Speicherdruck des Hydraulikkreises bei hydraulischen Umformmaschinen bzw. Hämmern, Verschleiß am Werkzeug und/oder an der Bär-Führung, usw. in Betracht.

Die schlagende Umformmaschine kann einen Rahmen mit einem daran bewegbar gelagerten Bären umfassen, an dem im Betrieb ein Umformwerkzeug (z.B. Obergesenk) angebracht sein kann. Zur Ausführung des Umformschlags kann ein Hydraulikzylinder mit zugeordnetem Hydraulikkreis, ein elektrischer Linearantrieb, z.B. ein elektromagnetischer Linearmotor, ein Spindeltrieb (bei einer Spindelpresse) und dgl. vorgesehen sein.

Unter einem Umformbetrieb ist hierin ein Betrieb der schlagenden Umformmaschine - im Folgenden kurz auch Umformmaschine bezeichnet - zu verstehen, in welchem ein Werkstück durch Umformkräfte schlagend umgeformt wird. Üblicherweise wird bei Umformmaschinen das Werkstück zwischen zwei Werkzeugen, z.B. einem Oberwerkzeug und einem Unterwerkzeug, positioniert, und zumindest eines der Werkzeuge wird in Richtung des jeweils anderen Werkzeugs hin beschleunigt. Bei der anschließenden schlagenden Umformung wird die kinetische Energie des Umformwerkzeugs und der damit gekoppelten bewegten Masse innerhalb kurzer Zeit ("Schlag") in Umformarbeit umgewandelt, sprich das Werkstück wird umgeformt.

Bei zyklischem Umformbetrieb durchläuft das Werkzeug bzw. der Bär unterschiedliche Bewegungsphasen. Auf die Initiierung des Umformschlags folgt eine initiale Bewegungsphase, in welcher das (Umform-)Werkzeug im Umformbetrieb von einer initialen Position (Startposition, oder oberer Umkehrpunkt), ausgehend auf das Werkstück hin beschleunigt wird. Der initialen Bewegungsphase schließt sich die Umformphase an, in welcher das Werkstück durch das/die Werkzeuge umgeformt wird. Üblicherweise umfasst der zyklische Umformbetrieb ferner eine finale Bewegungsphase, in welcher das Werkzeug entgegengesetzt zur Bewegung in der initialen Bewegungsphase bewegt wird, hin zu einer finalen Position, welche das Ende eines Bewegungs- oder Umformzyklus eines Umformvorgangs definiert und mit der Startposition z.B. eines nachfolgenden Umformzyklus übereinstimmen kann. Im Zusammenhang mit hydraulischen Umformmaschinen mit linear wirkenden Aktuatoren, wie Hydraulikzylinder oder elektromagnetischen Linearmotoren, sind für die initiale Bewegungsphase und die finale Bewegungsphase insbesondere auch die Begriffe Hub und Rückhub geläufig. Das Werkzeug wird in der initialen Bewegungsphase durch den Aktuator beschleunigt, wobei zur Beschleunigung des Werkzeugs auf eine gewünschte Geschwindigkeit nicht zwingend der gesamt Hubweg verwendet werden muss. Das bedeutet, dass nach Erreichen eines Geschwindigkeitswerts, mit dem die Soll-Geschwindigkeit für die Umformung erreicht werden kann, die Beschleunigung durch den Aktor beendet oder verändert werden kann, z.B. derart, dass sich das Werkzeug mit der erreichten Geschwindigkeit bis zur Umformung weiterbewegen kann. Bei der Umformung ist das Antriebssystem in der Regel vom Werkzeug freigeschalten, um zu vermeiden, dass aus der Umformung resultierende Rückschlagkräfte oder Prallkräfte unmittelbar auf das Antriebssystem einwirken.

Einem Umformschlag kann und ist üblicherweise eine definierte Soll-Geschwindigkeit oder Soll-Bewegungsenergie (oder: Umformenergie, Schlagenergie) zugeordnet. Die Soll-Geschwindigkeit oder Soll-Bewegungsenergie ist dabei eine für einen jeweiligen Umformvorgang oder -zyklus vorgegebene Geschwindigkeit oder Bewegungsenergie, mit welcher das Werkstück umgeformt werden soll (oder umzuformen ist), beispielsweise zur Erlangung eines gewünschten (optimalen) Umformergebnisses. In der Umformphase wird die Bewegungsenergie in Umformenergie am Werkstück umgewandelt wird. Die Soll-Geschwindigkeit oder Soll-Bewegungsenergie (oder: Soll-Schlagenergie) kann beispielsweise durch Berechnung, insbesondere Simulation, oder durch Versuchsreihen ermittelt werden, und ist in der Regel abhängig von der Art der Umformung, dem Material des Werkstücks und anderen Randparametern.

Bei vorgegebener Soll-Geschwindigkeit kann die Steuer- oder Regeleinheit einen Ist-Datensatz bereitstellen, welcher dazu ausgelegt ist, das Werkzeug bei der Ausführung eines Umformschlags auf die Soll-Geschwindigkeit zu beschleunigen. Aufgrund der oben genannten Einflüsse und Einflussfaktoren kann es vorkommen, dass die vorgegebene Soll-Geschwindigkeit tatsächlich nicht erreicht wird. Um dies zumindest weitgehend oder gar gänzlich zu vermeiden, ist erfindungsgemäß vorgesehen, dass der Ist-Datensatz bei, oder unmittelbar bei oder nach der Initiierung der Schlagausführung dem neuronalen Netz als Eingabedaten übergeben werden, und das neuronale Netz Ausgabedaten mit Soll-Betriebsdaten erzeugt. Diese Soll-Betriebsdaten werden dann an die Steuereinheit oder Regeleinheit übergeben und zur weiteren Steuerung/Regelung der Schlagausführung verwendet. Entsprechende Soll-Betriebsdaten können beispielsweise Ansteuerwerte für den Aktuator, Ansteuerkurven und/oder zeitreihen von Ansteuerparametern und dgl., für eine Aktuator-Steuereinheit zur Steuerung oder Reglung eines Aktuators zur Beschleunigung des Werkzeugs umfassen.

Gemäß Ausgestaltungen kann die Steuer- oder Regeleinheit die Schlagausführung basierend auf zumindest einem Steuerparameter oder Steuerparametersatz initiieren.

Zur Initiierung der Schlagausführung, z.B. für eine initiale Schlagauslösung, verwendete Steuer- oder Ansteuerparameter oder -Datensätze und gegebenenfalls weitere Ansteuerparameter-Datensätze, können in einem der Steuer oder Regeleinheit zugeordneten Speicher gespeichert sein. Jeder Ansteuerparameter-Datensatz kann Ansteuerdaten für jeweils einen spezifischen Umformvorgang umfassen. Ein Ansteuerparameter-Datensatz kann, beispielsweise durch eine Instruktion zur Ausführung eines spezifischen Umformvorgangs durch die Steuer- oder Regeleineinheit, aus dem Speicher ausgelesen und zur initialen Steuerung oder Regelung des Aktuators zur Ausführung einer anfänglichen Phase Umformvorgangs umgesetzt werden, insbesondere bis durch das neuronale Netz ermittelte Soll-Betriebsparameter vorliegen, die dann, zumindest teilweise, an Stelle der initialen Ansteuerparameter verwendet werden können. Entsprechend ist bei dem hierin vorgeschlagenen Verfahren kann vorgesehen sein, dass zur Initiierung des Umformschlags verwendeten Ansteuer-Datensätze, die auch als initiale Ansteuerparameter-Datensätze bezeichnet werden können, durch von dem neuronalen Netz ermittelte Soll-Betriebsdaten oder - Datensätze ersetzt oder modifiziert werden.

Gemäß Ausgestaltungen ist das trainierte neuronale Netz derart eingerichtet, dass die Ausgabedaten zumindest einen Soll-Steuerparameter oder Soll-Steuerparametersatz umfassen. Ferner ist die Steuer- oder Regeleinheit dazu eingerichtet, zur weiteren Schlagausführung anstelle des zumindest einen initialen Steuerparameters oder Steuerparametersatzes den zumindest einen Soll-Steuerparameter oder Soll-Steuerparametersatz anzuwenden, was ein Ersetzen oder ein Modifizieren des jeweiligen Parameters umfassen kann. Mithin kann vorgesehen sein, dass die Steuer- und Regeleinheit einen oder mehrere zur Initiierung der Schlagauslösung verwendete Steuerparameter durch die von dem neuronalen Netz bereitgestellten Soll-Steuerparameter ersetzt/modifiziert, und für die weitere Schlagausführung entsprechend anwendet. Das ermöglicht insbesondere eine besonders genaue Schlagsteuerung, insbesondere unter Echtzeitbedingungen.

Wie vorweg bereits angedeutet wurde, kann in Ausgestaltungen vorgesehen sein, dass die Steuer- oder Regeleinheit wirkverbunden ist mit einem Aktuator und der Aktuator gekoppelt ist mit einem zur Werkstückumformung ausgebildeten Umformwerkzeug. Das Verfahren kann des Weiteren umfassen das Steuern oder Regeln des Betriebs des Aktuators durch die Steuer- oder Regeleinheit zur Bewegungssteuerung oder -regelung des Umformwerkzeugs für die weitere Schlagausführung anhand der Soll-Betriebsdaten, insbesondere basierend auf oder anhand des oder der Soll-Steuerparameter. Bei dem Aktuator kann es sich z.B. einen Hydraulikzylinder mit zugeordnetem Hydraulikkreis einer hydraulischen Umformmaschine handeln. Zur Steuerung des Hydraulikzylinders können steuerbare Ventile, z.B. Proportionalventile, vorgesehen sein, wie beispielsweise beschrieben in DE 10 2021 101 539 B4 oder in DE 10 2023 113 473 A1, auf deren Offenbarungsgehalt hierin vollumfänglich Bezug genommen wird.

Gemäß Ausgestaltungen kann das Bereitstellen des den Betriebspunkt beschreibenden oder charakterisierenden Ist-Datensatzes dynamisch erfolgen. Beispielsweise können eine oder mehrere Ist-Betriebsparameter oder Ist-Betriebsdaten jeweils bei oder kurz nach Schlagauslösung sensorbasiert ermittelt werden.

Gemäß Ausgestaltungen kann insbesondere vorgesehen sein, dass das Bereitstellen des Ist-Datensatzes das Erfassen von einer oder mehrerer, den Betriebspunkt charakterisierenden Ist-Betriebsgrößen mittels eines oder mehreren Sensoren umfasst. Die gemessenen Werte der Ist-Betriebsgrößen können entsprechend als Ist-Betriebsdaten in den Ist-Datensatz integriert werden, d.h. dass der Ist-Datensatz auf Grundlage der gemessenen Werte erzeugt werden kann. Bei den gemessenen Werten kann es sich um dynamische oder statische Parameter oder Größen handeln. Ein dynamischer Parameter oder Größe ist insbesondere ein Parameter/eine Größe, dessen/deren Wert sich im Betrieb bei jedem oder zumindest nach einigen wenigen Umformzyklen ändert, wie beispielsweise Öffnungsweiten von Ansteuerventilen eines Hydraulikzylinders zur Beschleunigung des Werkzeugs, Hydraulikdruck usw.. Ein statischer Parameter oder Größe (oder auch quasi-statischer Parameter) ist hingegen ein Parameter/eine Größe, dessen/deren Wert sich über mehrere Umformzyklen üblicherweise nicht oder kaum verändert, wie beispielsweise die Umgebungstemperatur, eine Öltemperatur eines Hydraulikfluids usw..

Nach Ausgestaltungen umfasst das Bereitstellen des den Betriebspunkt beschreibenden oder charakterisierenden Ist-Datensatzes das Ermitteln oder das Bereitstellen von Stamm-, Konfigurations- oder Zustandsdaten, welche die Umformmaschine charakterisieren, und das Integrieren der Stamm-, Konfigurations- oder Zustandsdaten als Ist-Betriebsdaten in den Ist-Datensatz. Insoweit ist vorgesehen, dass der Ist-Datensatz z.B. neben Steuerparametern (wie z.B. Ansteuerzeiten oder Ansteuerverläufe für den Aktuator usw.) auch andere, die Steuerung der Umformmaschine nicht unmittelbar betreffende Betriebsgrößen der Umformmaschine umfasst. Vorzugsweise umfasst der Ist-Datensatz jeweilige Ist-Ansteuerdaten zur Steuerung/Regelung des Aktuators. Die Zahl der vom Ist-Datensatz umfassten Parameter oder Betriebsgrößen hängt u.a. von der jeweiligen Umformmaschine und/oder der Umformaufgabe ab. In gewissen Fällen kann es vorteilhaft sein, möglichst viele bekannte und/oder messbare Betriebsparameter zu berücksichtigen.

Nach Ausgestaltungen kann vorgesehen sein, dass das Bereitstellen des den Betriebspunkt beschreibenden oder charakterisierenden Ist-Datensatzes das Ermitteln eines oder mehrerer, die Schlagausführung durch die Steuer- oder Regeleinheit charakterisierender Ist-Steuer- oder Regelparameter umfasst. Die ermittelten Ist-Steuer- oder Regelparameter können dann als Ist-Betriebsdaten in den Ist-Datensatz integriert werden, bzw. der Ist-Datensatz kann aus den ermittelten Parametern erstellt werden.

Nach Ausgestaltungen kann zumindest eine der einen oder mehreren Ist-Betriebsgrößen ausgewählt sein aus der Gruppe: Position, Geschwindigkeit und/oder Beschleunigung eines Umformwerkzeugs der Umformmaschine im Betriebspunkt, Temperatur und/oder Druck eines Arbeitsfluids eines zur Schlagausführung verwendeten hydraulischen Antriebs im Betriebspunkt, Speicherdruck eines hydraulischen Antriebs der Umformmaschine.

Nach Ausgestaltungen können die einen oder mehreren Stamm-, Konfigurations- oder Zustandsdaten ausgewählt sein aus der Gruppe: Antriebsart, Maschinentemperatur, Verschleißzustand, maximale Schlagenergie, maximale Schlaghöhe, tatsächliche Schlaghöhe bzw. eine für das Werkzeug noch verfügbare Weglänge oder Zeit, Schlagfrequenz, Umformwerkzeuggewicht, Umformwerkzeugtyp, Werkstückart, Werkstückform, Werkstückmaterial, Werkstücktemperatur.

Nach Ausgestaltungen kann zumindest einer der Ist-Steuer- oder Regelparameter ausgewählt sein aus der Gruppe: Steuer- oder Regelparameter bei Initiierung der Schlagausführung, z.B. im Betriebspunkt, Zeitverlauf eines Steuer- oder Regelparameters zur Schlagausführung, Soll-Geschwindigkeit des Umformschlags, Soll-Energie des Umformschlags, Ansteuerdauer oder Ansteuerverlauf eines zur Beschleunigung des Umformwerkzeugs mit diesem gekoppelten Aktuator- oder Hydraulikeinheit.

Nach Ausgestaltungen umfasst die schlagende Umformmaschine ein Gestell oder Traggestell mit daran angebrachten Komponenten zur Schlagausführung. Beispielsweise kann an dem Gestell ein Aktor befestigt und es kann ein mit einem Aktuator gekoppeltes Werkzeug zur Schlagausführung am Gestell bewegbar gelagert sein. Das Gestell kann an einem Untergrund mittels einer Schwingungsdämpfervorrichtung schwingungsgedämpft gelagert sein, wobei die Schwingungsdämpfervorrichtung dazu eingerichtet ist, durch Umformschläge verursachte Schwingungen des Gestells relativ zum Untergrund zu dämpfen. Wie oben bereits erläutert wurde, ist das hierin vorgeschlagene KI-basierte Verfahren dazu geeignet, unerwünschte Variationen in der tatsächlich erreichten Umformgeschwindigkeit/-energie, die hervorgerufen werden durch die Dämpfungsschwingungen, zumindest zu unterdrücken. Beispielsweise kann das neuronale Netz auf Grundlage der jeweiligen Ist-Betriebsdaten im Betriebspunkt, welche zumindest teilweise beeinflusst sind durch die Dämpfungsschwingungen und/oder anderen Einflussfaktoren, einen Soll-Ansteuerparameterdatensatz bereitstellen, der von der Steuer- oder Regeleinheit zur weiteren Schlagsteuerung verwendet wird. Insbesondere kann das neuronale Netz basierend auf Trainingsdaten derart trainiert sein, dass dieses aus den Ist-Betriebsparametern einen oder mehrere Soll-Steuerparameter für den Aktor zur Schlagausführung ermittelt, wobei die jeweiligen Soll-Steuerparameter bei Anwendung durch die Steuer- oder Regeleinheit auf die weitere Schlagausführung (nach Bereitstellung der Soll-Steuerparameter) den Aktor so steuern/regeln, dass die jeweilige Soll-Geschwindigkeit präzise oder präziser und/oder wiederholbar erreicht werden kann.

Nach Ausgestaltungen ist ein Computer-Programmprodukt vorgesehen, das einen nichtflüchtigen Speicher umfasst mit darauf gespeicherten maschinenlesbaren Instruktionen, die bei Ausführung durch eine elektronische Steuer- oder Regeleinheit ein Verfahren nach einem der der hierin beschriebenen Ausgestaltungen bewirken.

Nach Ausgestaltungen ist eine Kontrolleinheit vorgesehen, die eingerichtet ist zur Steuerung oder Regelung einer schlagenden Umformmaschine, wobei die Kontrolleinheit einen oder mehrere Datenverarbeitungseinheiten, insbesondere Prozessoren, umfasst und einen nichtflüchtigen Speicher, auf welchem Instruktionen gespeichert sind, die bei Ausführung durch eine oder mehrere der Datenverarbeitungseinheiten, insbesondere Prozessoren, beim Betrieb der schlagenden Umformmaschine ein Verfahren nach einem der der hierin beschriebenen Ausgestaltungen bewirken.

Nach Ausgestaltungen ist eine schlagende Umformmaschine, insbesondere Schmiedehammer, hydraulischer Hammer, oder Gesenkschmiedehammer, vorgesehen. Die Umformmaschine umfasst zumindest einen Aktuator und zumindest ein mit dem Aktuator gekoppeltes oder koppelbares und an einem Gestell oder Traggestell beweglich angebrachtes Werkzeug zur schlagenden Werkstückumformung, insbesondere zur schlagenden Umformung eines metallischen Werkstücks. Ferner umfasst die Umformmaschine eine Kontrolleinheit nach einem der hierin beschriebenen Ausgestaltungen, die wirkverbunden, insbesondere steuer- oder regelungstechnisch gekoppelt, ist mit dem Aktuator zur Bewegungssteuerung oder -regelung des Werkzeugs oder Umformwerkzeugs durch den Aktuator bei der Schlagausführung des Umformschlags zur Umformung des Werkstücks.

In Ausgestaltungen der Umformmaschine umfasst der Aktuator einen hydraulischen Linearaktor und einen mit dem Linearaktor über ein oder mehrere steuer- oder regelbare Hydraulikkomponenten, wie Hydraulikventile, Wegeventile, Proportionalventile, Hydraulikmotoren usw., hydraulisch wirkverbundenen Hydraulikkreis. Die die Kontrolleinheit ist wirkverbunden mit den ein oder mehreren Hydraulikkomponenten und ist dazu eingerichtet, bei Ausführung eines Verfahrens nach einem der hierin beschriebenen Ausgestaltungen die ein oder mehreren Hydraulikkomponenten zumindest für die Initiierung der Schlagausführung und für die weitere Schlagausführung des Umformschlags anhand der Soll-Betriebsdaten zu steuern oder zu regeln.

In Ausgestaltungen kann das Verfahren die folgenden Schritte umfassen:
a) Starten einer initialen Bewegungsphase, umfassend beispielsweise die Initiierung der Schlagauslösung, basierend auf zumindest einem dynamischen Ansteuerparameter-Datensatz, umfassend beispielsweise Ansteuerparameter für den Aktor basierend beispielsweise auf Standardwerten, und optional zumindest einem quasi-stationären Betriebsparameter, wie beispielsweise die für einen Umformzyklus gleichbleibende ("quasi-stationäre") Soll-Geschwindigkeit oder Soll-Bewegungsenergie (oder: Soll-Umformenergie); und
während der initialen Bewegungsphase:
b) Ermitteln des Ist-Datensatzes, insbesondere eines Ist-Betriebsparameterdatensatzes, mittels zumindest einer Sensoreinheit, wobei Ist-Datensatz zumindest einen dynamischen Betriebsparameter, beispielsweise eine aktuelle Geschwindigkeit des Werkzeugs, Bären, oder Gesenks und/oder eine zu erreichende Soll-Geschwindigkeit/Soll-Umformenergie, umfasst;
c) Verwenden des Ist-Datensatzes, als Eingabedaten für das trainierte neuronale Netz,
d) Ermitteln der Soll-Betriebsdaten, umfassend beispielsweise zumindest einen dynamischen Soll-Ansteuerparameter oder Soll-Ansteuerparameter-Datensatz, durch Anwenden des neuronalen Netzes auf die Eingabedaten; und
e) Anwenden der Soll-Betriebsdaten, insbesondere des zumindest einen ermittelten dynamischen Soll-Ansteuerparameters oder Soll-Ansteuerparameter-Datensatzes, zur Modifikation oder an Stelle der Ist-Betriebsdaten zur weiteren Steuerung und/oder Regelung des Umformbetriebs.

Mithin kann in Ausgestaltungen vorgesehen sein, dass die Steuerung oder Regelung des Aktuators zur Beschleunigung des Werkzeugs bei oder nach Vorliegen des Soll-Ansteuerparameter-Datensatzes im weiteren Verlauf auf Grundlage des Soll-Ansteuerparameterdatensatzes erfolgt. Der initiale Ansteuerparameter-Datensatz kann, wie erwähnt, dazu vorgesehen sein, den Umformvorgang zu initiieren bzw. zu starten, und kann z.B. auf Standardwerten basieren. Mithin ist es möglich, die Schlagauslösung basierend auf Standardwerten zu initiieren und für die weitere Schlagausführung die vom neuronalen Netz auf Grundlage des Ist-Datensatzes ermittelten Soll-Betriebsdaten zu verwenden. Da das neuronale Netz die Schlagausführung modelliert, insbesondere dazu eingerichtet sein kann, eine optimale Schlagausführung zur Erreichung einer gewünschten Soll-Geschwindigkeit oder Soll-Umformenergie zu modellieren, kann durch Anwenden der Soll-Betriebsdaten eine Steuerung oder Regelung erfolgen, mit welcher ein optimaler Umformschlag, insbesondere ein Umformschlag mit der gewünschten bzw. mit optimaler Soll-Geschwindigkeit oder Soll-Umformenergie, ausgeführt wird.

Basierend auf dem trainierten neuronalen Netz und der Verwendung des Ist-Datensatzes als Eingabedaten kann insbesondere ein optimaler Soll-Datensatz, insbesondere ein optimaler Soll-Ansteuerparameter-Datensatz, ermittelt werden, bei dessen Anwendung zur Steuerung oder Regelung des Aktors, verglichen mit den initialen Ansteuerparametern, ein optimaler oder optimierter Soll-Umformbetrieb umgesetzt werden kann.

Insbesondere ist es möglich, die jeweils vorgegebene Soll-Geschwindigkeit oder Soll-Umformenergie vergleichsweise zuverlässig zu erreichen. Ferner ist es durch die Verwendung des trainierten neuronalen Netzes in vorteilhafter Weise möglich, den Einfluss von Störeffekten, wie System-Schwingungen, auf die tatsächlich erreichte Geschwindigkeit oder Umformenergie zu verringern oder gar zu beseitigen. Mithin ist es möglich, die Umformvorgänge mit jeweils optimaler Geschwindigkeit oder Umformenergie auszuführen, die jeweils der Soll-Geschwindigkeit oder Soll-Umformenergie entspricht oder im Wesentlichen entspricht. Durch eine solche Optimierung kann die Umformqualität verbessert, insbesondere optimiert werden.

Im Rahmen der hierin beschriebenen Erfindung soll unter einem "quasi-stationären Betriebsparameter" ein Betriebsparameter verstanden werden, welcher zumindest in einem Umformzyklus, zumindest oder im Wesentlichen jedoch für die Dauer einer initialen Bewegungsphase, konstant oder im Wesentlichen konstant, d.h. bis auf vernachlässige Schwankungen konstant, ist, oder als konstant anzusehen ist. Ein Beispiel für einen quasi-stationären Betriebsparameter bildet z.B. die Soll-Geschwindigkeit, die zumindest für einen Umformzyklus konstant ist. Ein weiteres Beispiel ist die Umgebungstemperatur oder die Temperatur eines Hydraulikfluids bei einer hydraulischen Umformmaschine, die zumindest während der Steuerung oder Regelung während einer initialen Bewegungsphase konstant oder im Wesentlichen konstant, d.h. bis auf vernachlässigbare Schwankungen, konstant ist. Der Begriff quasi-stationär soll also nicht bedeuten, dass der entsprechende Parameter nicht veränderbar ist. Vielmehr soll sich der Begriff quasi-stationär insbesondere auf einen zumindest während einer initialen Bewegungsphase stationären oder als stationär anzunehmenden Parameter beziehen.

Unter einem dynamischen Parameter, wie einem dynamischen Betriebsparameter oder einem dynamischen Ansteuerparameter, soll ein Parameter verstanden werden, welcher sich in einem Umformzyklus oder bei einer Umformoperation (umfassend eine initiale Bewegungsphase, die Bewegungssteuerung bis zum Umformschlag, den Umformschlag und ggf. den Rückhub), zumindest oder im Wesentlichen jedoch für die Dauer der initialen Bewegungsphase, explizit ändern oder explizit verändert werden. Insbesondere soll sich der Begriff dynamisch auf einen Parameter beziehen, welcher im Umformbetrieb gezielt verändert, variiert oder angepasst wird oder dazu vorgesehen ist, während des Betriebs der Umformmaschine gezielt verändert, variiert oder angepasst zu werden. Ein Beispiel für einen dynamischen Betriebsparameter ist die Geschwindigkeit des Werkzeugs, welche in der initialen Bewegungsphase durch entsprechende Beschleunigung durch den Aktuator gezielt verändert wird. Ein Beispiel für einen dynamischen Ansteuerparameter ist eine Öffnungsweite und/oder Öffnungsdauer eines steuer- oder regelbaren Hydraulikventils, z.B. eines Schlagventils, zur Initiierung eines Umformschlags und zur Bewegungssteuerung bis zum Umformschlag, bei einer Umformmaschine mit einem hydraulisch gesteuerten oder geregelten Hydraulikzylinder als Aktuator.

Nach Ausgestaltungen kann der Umformbetrieb der Umformmaschine eine Kaltumformung, Warmumformung, oder Massivumformung eines metallischen Werkstücks betreffen.

Nach Ausgestaltungen können ein oder mehrere Ist-Betriebsdaten des Ist-Datensatzes in einem Erfassungszeitpunkt ermittelt werden, der nach dem Initiieren der Schlagausführung liegt. Beispielsweise kann die Geschwindigkeit und/oder Position des Bären oder Werkzeugs in einem vorgegebenen festen Abstand von einer initialen Werkzeugposition ermittelt werden. Beispielsweise kann der dynamische Betriebsparameter, wie die Geschwindigkeit des Werkzeugs, an einer vorgegebenen oder vorgebaren Position längs des Bewegungsverlaufs des Werkzeugs der initialen Bewegungsphase der Schlagausführung gemessen werden. Vorzugsweise erfolgt die Erfassung des dynamischen Betriebsparameters innerhalb, insbesondere innerhalb der ersten Hälfte, vorzugsweise des ersten Drittels, weiter vorzugsweise des ersten Viertels, der vom Werkzeug in der initialen Bewegungsphase zurückgelegten Wegstrecke.

Nach Ausgestaltungen ist ein Verfahren zur Steuerung des Aktuators zur Beschleunigung des Werkzeugs einer Umformmaschine auf eine vorgegebene Geschwindigkeit oder Umformenergie und zur Korrektur, Vermeidung oder zumindest zur Reduktion von durch Komponenten der Umformmaschine, wie Schwingungsdämpfer, verursachte Abweichungen der tatsächlichen Geschwindigkeit oder Umformenergie des Werkzeugs von der Soll-Geschwindigkeit oder Soll-Umformenergie vorgesehen. Ein entsprechendes Verfahren kann umfassen:
a) Initiieren des Umformvorgangs oder einer Schlagausführung unter Verwendung zumindest eines initialen, dynamischen Ist-Ansteuerparameters oder eines Ist-Ansteuerparameter-Datensatzes mit einem oder mehreren Ist-Ansteuerparametern zur Ansteuerung des Aktuators und Beschleunigung des Umformwerkzeugs in der initialen Bewegungsphase;
b) Erfassen der Geschwindigkeit des Umformwerkzeugs oder einer damit gekoppelten und synchron mitbewegten Komponente der Umformmaschine, z.B. eines Gesenks, Bären oder Werkzeugs, in der initialen Bewegungsphase an einer vorgegebenen Position längs des Bewegungspfads des Umformwerkzeugs oder nach einer vorgegebenen Zeit nach Initiierung der initialen Bewegungsphase;
c) Ermitteln oder Berechnen zumindest eines Soll-Ansteuerparameters oder Soll-ansteuerparameter-Datensatzes mit zumindest einem Soll-Ansteuerparameter zur Ansteuerung des Aktuators und Beschleunigung des Werkzeugs im weiteren Verlauf der initialen Bewegungsphase auf die Soll-Geschwindigkeit oder Soll-Umformenergie, wobei zumindest die erfasste Geschwindigkeit, und optional die vorgegebene Soll-Geschwindigkeit oder Soll-Umformenergie, als Eingabedaten des neuronalen Netzes verwendet werden; und
d) Verwenden des zumindest einen Soll-Ansteuerparameters oder Soll-Ansteuerparameter-Datensatzes zur Modifikation oder an Stelle des initialen (dynamischen) Ansteuer-Betriebsparameters zur weiteren Ansteuerung des Aktuators und Beschleunigung des Werkzeugs im weiteren Verlauf der Ausführung des Umformschlags zur Beschleunigung auf die Soll-Geschwindigkeit oder Soll-Umformenergie.

Hinsichtlich des Trainings des neuronalen Netzes ist es möglich, dass den Trainingsdatensätzen jeweils gewisse, gemeinsame (vorgegebene) Randbedingungen zu Grunde liegen. Beispielsweise kann das das neuronale Netz auf Grundlage von Trainingsdatensätzen trainiert sein oder werden, welche einem fest vorgegebenen Umformvorgang entsprechen, mithin einem Umformvorgang für welchen z.B. ein oder mehrere quasi-statische Betriebsparameter, wie Material des Werkstücks, Umformart, Art der Umformmaschine, Druck des Hydraulikfluids im Hydraulikkreis usw. vorgegeben sind, und dem gegebene initiale Ansteuerparameter zu Grunde liegen, wie z.B. eine initiale Öffnungsweite eines Ventils zur Ansteuerung des Aktuators in der initialen Bewegungsphase. Mit anderen Worten kann das neuronale Netz basierend auf einer gewissen Anzahl, z.B. basierend auf einer maximalen Anzahl, fest vorgegebener Betriebs- und Ansteuerparametern als (fixe oder vorgegebene) Randbedingungen trainiert sein. In diesem Fall kann der Eingabedatensatz auf Betriebs- und/oder Ansteuerparameter beschränkt werden, die nicht bereits durch die Randbedingungen vorgegeben sind. Entsprechen die Trainingsdaten jeweils beispielsweise einem konkreten Umformvorgang, so kann es ausreichend sein, lediglich die gemessene Geschwindigkeit und die Soll-Geschwindigkeit oder Soll-Umformenergie als Eingabedaten bereitzustellen. Für eine breite Anwendung des neuronalen Netzes ist es jedoch vorteilhaft möglichst viele Parameter und/oder Randbedingungen einzubeziehen.

Im Rahmen der Erfindung ist es insbesondere möglich, dass das neuronale Netz unter Verwendung von Trainingstatensätzen trainiert ist, denen, zumindest teilweise, verschiedene Randbedingungen hinsichtlich Betriebs- und/oder Ansteuerparametern zu Grunde liegen. Als Beispiel wäre hier zu nennen Trainingsdatensätze für unterschiedliche Umformvorgänge, die sich beispielsweise hinsichtlich Material, Umformart, Art der Umformmaschine usw. unterscheiden.

In beiden Fällen ist das hierin vorgeschlagene Verfahren zur Steuerung oder Regelung eines Umformschlags gleich. Ein Unterschied besteht im Wesentlichen lediglich hinsichtlich der verwendeten Trainingsdaten und der Struktur des neuronalen Netzes (Anzahl der Schichten, Anzahl der Knoten usw.).

Nach einer Ausgestaltung kann das künstliche neuronales Netz eine oder mehrere der nachfolgenden Eigenschaften aufweisen:
- das neuronale Netz ist durch eine gleichgerichtete lineare Einheit (ReLU) (ReLU, engl.: Rectified Linear Unit, deutsch: lineare Aktivierungsfunktion) aktiviert;
- das neuronale Netz umfasst eine oder mehrere Schichten (Layer), insbesondere bis zu 5 oder bis zu 7 Schichten oder mehr;
- die Schichten des neuronalen Netzes sind jeweils durch Dense-Layer gebildet.

Die hierin beschriebene Erfindung ermöglicht insbesondere eine Optimierung des Umformergebnisses bei einer schlagenden Umformmaschine basierend auf einem trainierten neuronalen Netz. Gemäß vorteilhafter Ausgestaltungen kann insbesondere die Steuerung der Geschwindigkeit des Werkzeugs der Umformmaschine optimiert werden, wobei im Vergleich zu bekannten Steuerungsverfahren, durch diverse Einflussfaktoren verursachte Abweichungen oder Variationen der tatsächlich erreichten Umformgeschwindigkeit oder Umformenergie von einer vorgegebenen oder gewünschten Soll-Geschwindigkeit oder Soll-Umformenergie, zumindest reduziert oder im Wesentlichen oder vollständig vermieden werden können.

Ausführungsbeispiele der Erfindung werden nachfolgend anhand der anhängenden Figuren näher beschrieben. Es zeigen:
- FIG. 1: schematisch eine Umformmaschine, bei der es sich beispielsweise um einen Schmiedehammer handeln kann; und
- FIG. 2: exemplarisch ein Beispiel eines Verfahrens zur Steuerung oder Regelung eines Umformbetriebs der Umformmaschine unter Verwendung eines trainierten neuronalen Netzes.

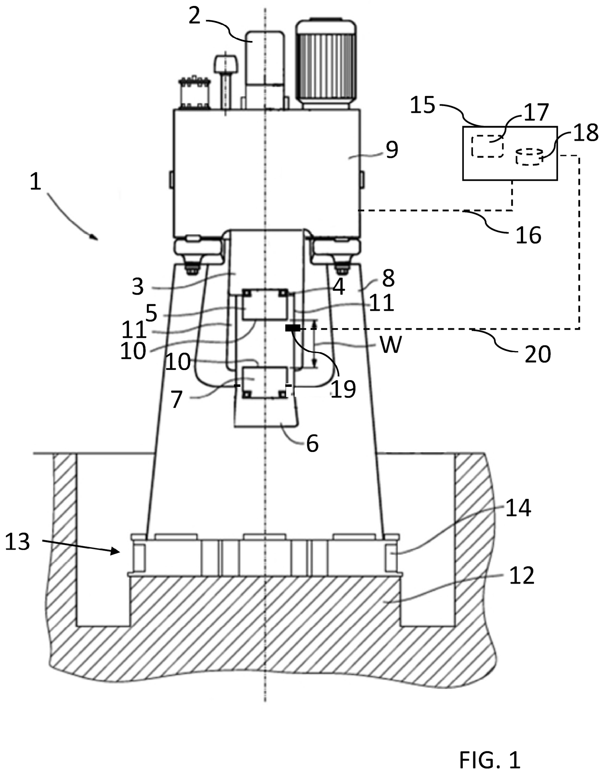

FIG. 1 zeigt schematisch eine schlagende Umformmaschine 1, bei der es sich beispielsweise um einen Schmiedehammer handeln kann.

Die Umformmaschine 1 umfasst einen Aktuator 2, der in dem gezeigten Beispiel als Hydraulikzylinder ausgebildet ist, wobei es sich bei der beispielhaft gezeigten Umformmaschine 1 um eine hydraulische Umformmaschine handelt, bei welcher der Aktuator 2 durch einen Hydraulikkreis betrieben wird.

Die Umformmaschine 1 umfasst ferner einen Bären 3 mit einem daran über Befestigungselemente 4 befestigten Umformwerkzeug 5 (kurz: Werkzeug 5) und eine Schabotte 6 mit einem korrespondierenden weiteren Umformwerkzeug 7.

Die Umformmaschine umfasst des Weiteren ein Gestell 8 (oder: Rahmen) und einen daran angebrachten Maschinenkopf 9, der z.B. an einem oberen Ende des Gestells 8 schraubbefestigt ist. In dem Maschinenkopf 9 sind beispielsweise Hydraulikkomponenten zur hydraulischen Ansteuerung des als Hydraulikzylinder ausgebildeten Aktuators 2 untergebracht. Ferner ist der Aktuator 2 am Maschinenkopf 9 befestigt und über diesen am Gestell 8 abgestützt.

Der Aktuator 2 ist mit dem Bären 3 und mithin mit dem Werkzeug 5 gekoppelt, so dass der Aktuator 2, zur Ausführung einer Umformoperation oder eines Umformschlags, den Bären 3 mit dem Werkzeug 5 zum weiteren Werkzeug 7 hinbewegen kann, auch bekannt als Hub oder Schlag. Nach der Umformung unter Einwirkung der Werkzeuge 5 und 7 mit zugehörigen Gravuren 10 im unteren Umkehrpunkt des Bären 3, erfolgt eine reziproke Bewegung des Bären 3 durch den Aktuator 2, auch als Rückhub bekannt, wodurch der Bär 3 zu einem oberen Umkehrpunkt bewegt wird, und für die Ausführung einer weiteren Umformoperation bereit ist.

Der Bär 3 ist an beiderseitigen Führungen 11 des Gestells 8 beweglich geführt, wobei in dem gezeigten Beispiel der für das Werkzeug 5 verfügbare Hubweg mit dem Bezugszeichen W bezeichnet ist.

Das Gestell 8 ist auf einem Untergrund oder Maschinengrund 12 befestigt, wobei das Gestell 8 vom Maschinengrund 12 durch eine zwischengeschaltete Schwingungsdämpfervorrichtung 13 schwingungsdämpfend entkoppelt ist. Die zwischen dem Gestell 8 und dem Maschinengrund 12 angeordnete Schwingungsdämpfervorrichtung 13 kann z.B. mehrere Schwingungsdämpfer 14 aufweisen, welche in der Auflageebene des Gestells 8 in einem vorgegebenen Muster verteilt angeordnet sein können. Bei den Schwingungsdämpfern 14 kann es sich um Dämpfungselemente basierend auf elastischen Materialien und/oder Federelementen handeln.

Die Umformmaschine 1 umfasst ferner eine Kontrolleinheit 15, oder Steuer- oder Regeleinheit, die über Kontrollleitungen 16, oder Steuerleitungen, zur Ansteuerung und Betriebssteuerung des Aktuators 2, z.B. basierend auf (nicht gezeigten) Ventileinheiten, steuerungstechnisch wirkverbunden ist. Die Kontrolleinheit 15 umfasst eine Datenverarbeitungseinheit 17, z.B. mit einem oder mehreren Prozessoren, und einen zugeordneten Speicher 18, wobei die Datenverarbeitungseinheit 17 dazu eingerichtet ist, auf dem Speicher 18, z.B. in Form von Umformprogrammen, gespeicherte Instruktionen auszuführen. Die gespeicherten Instruktionen bewirken bei Ausführung durch die Datenverarbeitungseinheit 17 einen Umformbetrieb gemäß einem der hierin beschriebenen verfahrensgemäßen Ausgestaltungen.

Die Umformmaschine 1 weist zudem eine Sensoreinheit 19 auf, bei welcher es sich vorliegend um einen Positionssensor handelt, zur Erfassung oder Messung einer Position des Bären 3 oder des Werkzeugs 5, wobei die Kontrolleinheit 16 dazu eingerichtet ist, aus den Messwerten des Positionssensors die Geschwindigkeit des Bären 3 bzw. des Werkzeugs zu ermitteln. Bär 3 und Werkzeug 5 bewegen sich aufgrund ihrer mechanischen Kopplung im Betrieb mit gleicher Geschwindigkeit. Die Sensoreinheit 19 ist über eine Datenverbindungsleitung 20 mit der Kontrolleinheit 16 verbunden, so dass Sensorsignale, im vorliegenden Beispiel Sensorsignale repräsentativ für die Position des Bären 3/des Werkzeugs 5, zur Weiterverarbeitung an die Datenverarbeitungseinheit 17 übertragen werden können.

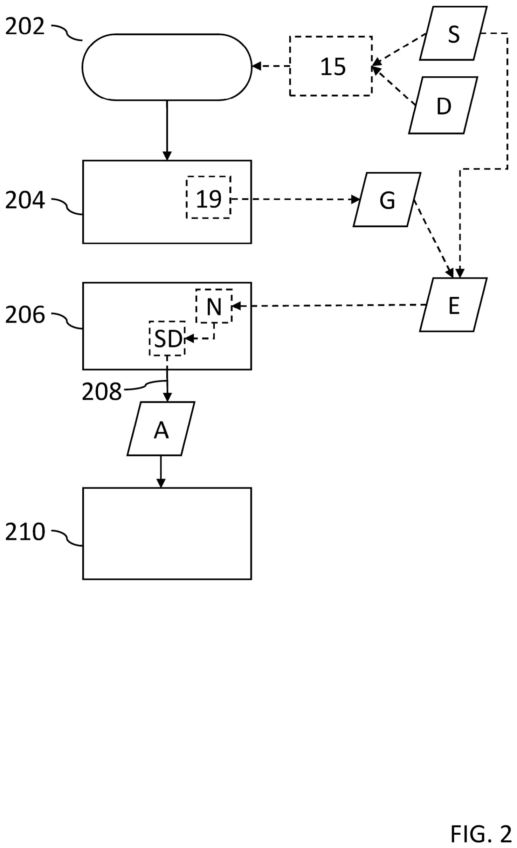

Im Folgenden wird im Zusammenhang mit FIG. 2 exemplarisch ein Umformbetrieb nach einer Ausgestaltung bzw. ein Verfahren zur Steuerung oder Regelung eines Umformbetriebs gemäß der Erfindung beschrieben, wobei das Verfahren als computer-implementiertes Verfahren ausgebildet ist, und der Umformbetrieb durch die Kontrolleinheit 15 gesteuert oder geregelt wird.

Bei dem beispielhaften Verfahren ist dem Umformbetrieb der Umformmaschine 1 zumindest ein vorgegebener quasi-stationärer Betriebsparameter, beispielsweise eine vorgegebene Soll-Geschwindigkeit S zugeordnet. Ferner ist dem Umformbetrieb ein dynamischer Ansteuerparameter-Datensatz D zugeordnet, der zur Umsetzung oder Ausführung durch die Kontrolleinheit 15 eingerichtet ist und bei Ausführung durch die Kontrolleinheit 15 zumindest eine Initiierung des Umformbetriebs (initiale Bewegungsphase), insbesondere einer Umformoperation, wie eines Umformschlags, bewirkt.

Der Ansteuerparameter-Datensatz D kann eine oder mehrere (z.B. auf Standardwerten basierende) Ansteuerparameter umfassen, auf deren Grundlage die Kontrolleinheit 15 den Hub oder Schlag und Rückhub des Bären 3 steuern kann. Entsprechende Ansteuerparameter können beispielsweise Daten zum Betrieb des Aktuators 2 zur Ausführung eines Hubs oder Schlags (und entsprechend eines Rückhubs) betreffen.

Ist der Aktuator 2 wie im vorliegenden Beispiel als Hydraulikzylinder ausgebildet, welcher über gesteuerte Ventile mit Hydraulikfluid aus einem Hydraulickreis gesteuert wird, können die Ansteuerparameter die Öffnungsweite, die Öffnungszeit und/oder einen Öffnungsverlauf eines zur Ausführung eines Hubs oder Schlags vorgesehenen steuer- oder regelbaren Ventils vorgeben oder definieren. Die Ansteuerparameter sind dabei so eingerichtet, dass bei Umsetzung durch die Kontrolleinheit 1 das Werkzeug beschleunigt wird mit dem Ziel, die vorgegebene Sollgeschwindigkeit S zu erreichen.

Wie beschrieben ist die Umformmaschine 1 durch eine Schwingungsdämpfervorrichtung 13 gegen den Maschinengrund 12 dämpfend gelagert. Durch diese Schwingungsdämpfervorrichtung 13 wird vorteilhafterweise erreicht, dass bei einem Umformschlag bei der abrupten Abbremsung des Bären 3 und des Werkzeugs 5 bei der tatsächlichen Umformung eines Werkstücks zwischen den Werkzeugen 5 und 7 entstehende Schwingungen nicht ungehindert an den Maschinengrund 12 übertragen werden. Gleichzeitig kann die Schwindungsbelastung der Umformmaschine reduziert werden.

Allerdings, und wie weiter oben bereits beschrieben, kommt es durch die Schwingungsdämpfervorrichtung 13 bei Ausführung eines Umformschlags zu einem nachschwingen der Umformmaschine 1, insbesondere des Gestells 8 gegenüber dem Maschinengrund 12. Dieses Nachschwingen umfasst insbesondere Schwingungsbewegungen des Gestells 8 mit Bären 3 und Werkzeug 5 parallel zur Bewegungsrichtung des Bären 3 und Werkzeugs 5. Dabei können, gemäß der der Erfindung zu Grunde liegenden Erkenntnis, die Nachschwingungen bei Verwendung eines vorgegebenen Ansteuerparameter-Datensatzes zu Variationen der tatsächlich erreichten Geschwindigkeit des Bären 3 oder Werkzeugs 5 gegenüber der gewünschten Soll-Geschwindigkeit S führen. Die Variation der tatsächlichen Geschwindigkeit ist insbesondere abhängig von der Schwingungslage der Umformmaschine 1 oder des Gestells 8 bei Initiierung eines Umformschlags. Beispielsweise kann die tatsächliche Geschwindigkeit abhängig davon variieren, ob der Umformschlag zu einem Zeitpunkt initiiert wird, in welchem das Gestell 8 mit Bär 3 und Werkzeug 5 entgegen der Beschleunigungsrichtung des Aktuators 2 (in FIG. 1 nach oben) oder in Beschleunigungsrichtung des Aktuators 2 (in FIG. 1 nach unten) bei Ausführung eines Umformschlags schwingt.

Wie oben beschrieben ist es eine Erkenntnis der Erfindung, dass die genannten, durch die Schwingungen verursachten Variationen in der Geschwindigkeit auf Grundlage eines trainierten neuronalen Netzes eliminiert oder zumindest weitgehend oder weitestgehend vermieden werden können. Ein Beispiel für einen Umformbetrieb unter Verwendung eines neuronalen Netzes wird nachfolgend mit Bezug zu FIG. 2 beschrieben. Es wird angemerkt, dass aus Gründen einer vereinfachten Darstellung das im Zusammenhang mit den Figuren beschriebene Ausführungsbeispiel lediglich durch Schwingungen verursachten Variationen betrifft. Andere Einflussfaktoren wie Öltemperatur, Speicherdruck usw. können in analoger Anwendung eliminiert oder zumindest weitgehend eliminiert werden. Im Grunde kommen beliebige Kombinationen der weiter oben beschriebenen Parameter in Betracht.

Bei einem Umformbetrieb durchläuft das Werkzeug 5 (und entsprechend der Bär 3) mehrere Bewegungsphasen innerhalb eines Umformzyklus. Ausgehend von einem Startpunkt, der bei dem Beispiel der FIG 1 z.B. durch einen oberen Umkehrpunkt gegeben sein kann, wird das Werkzeug 5 durch den Aktuator 2 beschleunigt und auf das weitere Werkzeug 7 mit einem darauf angeordneten Werkstück zubewegt. Diese Phase der Bewegung (Hub) bildet oder umfasst eine initiale Bewegungsphase, die gekennzeichnet ist durch eine Initiierung der Schlagausführung oder der Initiierung der Umformbewegung des Werkzeugs. Im Bereich des unteren Umkehrpunkts erfolgt die Umformung des Werkstücks zwischen den Werkzeugen 5 und 7. Nach der Umformung folgt der Rückhub, in welcher der Bär 3 mit Werkzeug 5 in eine Endposition gebracht werden, beispielsweise in eine Ausgangsposition zur Ausführung eines nächsten Umformschlags.

Entsprechend den obigen Ausführungen beginnt eine Umformoperation mit der Initiierung 202 einer Schlagausführung (Schlagauslösung), wobei das Werkzeug 5 durch den Aktuator 2 basierend auf dem Ansteuerparameter-Datensatz D und der Kontrolleinheit 15 beschleunigt wird. Der für die Schlagauslösung bzw. Initiierung 202 der Schlagausführung in einer initialen Bewegungsphase verwendete Ansteuerparameter-Datensatz kann als ein initialer Ansteuerparameter-Datensatz bezeichnet werden, und beispielsweise auf Standardwerten für eine jeweilige Umformoperation basieren. Der Umformoperation liegt ferner der quasi-stationäre Betriebsparameter "Soll-Geschwindigkeit S" zu Grunde. Anstelle der Soll-Geschwindigkeit S kann gleichermaßen auch eine Soll-Bewegungsenergie des Umformwerkzeugs verwendet werden.

Insbesondere wird die Beschleunigung des Werkzeugs 5 durch den Aktuator 2 in der initialen Bewegungsphase durch die Kontrolleinheit 15 (auch: Aktuator-Steuereinheit) auf Grundlage des Ansteuerparameter-Datensatzes D gesteuert oder geregelt.

Dem Starten oder Initiieren 202 der Schlagauslösung folgt ein Ermitteln 204 von Ist-Betriebsdaten, wie der im vorliegenden Ausführungsbeispiel beispielhaft verwendeten (Ist-)Geschwindigkeit G des Werkzeugs 5 durch die Sensoreinheit 19. Die Ermittlung der Geschwindigkeit G erfolgt an einer vorgegebenen Position oder nach einer Zeitspanne nach dem Initiieren 202 der Schlagauslösung.

Die ermittelte Geschwindigkeit G und die Soll-Geschwindigkeit S, und ggf. ein oder mehrere weitere (Ist-)Ansteuer- und Betriebsparameter des Ansteuerparameter-Datensatzes D werden dann als Eingabedatensatz zusammengefasst und einem trainierten neuronalen Netz N (kurz: neuronales Netz N) als Eingabedaten E zur Verfügung gestellt.

Dabei modelliert das neuronale Netz N zumindest die Schlagausführung der Umformmaschine 1 und ist basierend auf einer Vielzahl von Trainingsdatensätzen trainiert, welche jeweils zumindest einen Trainingsparameterdatensatz umfassen, wobei jeder Trainingsparametersatz aus einem Umformbetrieb ermittelte und für einen Betrieb der Umformmaschine zur Steuerung oder Regelung eines Umformschlags relevante Trainingsbetriebsparameter umfasst.

Das neuronale Netz N ist dazu eingerichtet, aus den Eingabedaten E Soll-Betriebsdaten, beispielsweise einen Soll-Ansteuerparameter-Datensatz, zur weiteren Steuerung oder Regelung des Aktuators 2 durch die Kontrolleinheit 15 bei der weiteren Beschleunigung des Umformwerkzeugs auf die Soll-Geschwindigkeit als Ausgabedaten A zu ermitteln.

Entsprechend kann das Verfahren ein Ermitteln 206 des zumindest einen Soll-Ansteuerparameter-Datensatzes SD durch Anwenden des neuronalen Netzes N auf die Eingabedaten E und ein Bereitstellen 208 des Soll-Ansteuerparameter-Datensatzes SD als Ausgabedaten A des neuronalen Netzes N umfassen.

Nach dem Bereitstellen 208 bzw. Vorliegen des Soll-Ansteuerparameter-Datensatzes SD als Ausgabedaten A folgt in einem weiteren Schritt ein Anwenden 210 des ermittelten Soll-Ansteuerparameter-Datensatzes SD an Stelle des ursprünglichen Ansteuerparameter-Datensatzes D zur weiteren Steuerung und/oder Regelung des Umformbetriebs durch die Kotrolleinheit 15. Mit anderen Worten setzt die Kontrolleinheit 15 den Soll-Ansteuerparameter-Datensatz SD, insbesondere Soll-Betriebsdaten der Ausgabedaten A, an Stelle des (initialen) Ansteuerparameter-Datensatzes um.

Da das neuronale Netz N im vorliegenden Beispiel unter Verwendung einer Vielzahl an Trainingsdaten dahingehend trainiert ist, auf Grundlage zumindest der ermittelten Geschwindigkeit G optimale Ansteuerparameter zur Erreichung der Soll-Geschwindigkeit zu ermitteln, können, basierend auf der durch die Sensoreinheit 19 ermittelten (Ist-)Geschwindigkeit, durch die Schwingungsdämpfervorrichtung 13 hervorgerufene Variationen in der Geschwindigkeit eliminiert oder zumindest weitgehend vermieden werden. Insbesondere und allgemein formuliert können durch das trainierte neuronale Netz N Ansteuerparameter generiert werden, mit welchen die Soll-Geschwindigkeit trotz vorhandener Schwingungen zuverlässig erreicht werden kann, wobei an Stelle und/oder zusätzlich zur Geschwindigkeit andere Einflussfaktoren berücksichtigt werden können, wie Öldruck, Speicherdruck usw..

Insgesamt ermöglicht das hierin vorgeschlagene Verfahren, die Kontrolleinheit und die Umformmaschine eine verbesserte Steuerung eines Umformbetriebs.

### Bezugszeichenliste

- 1: Umformmaschine
- 2: Aktuator
- 3: Bär
- 4: Befestigungselement
- 5: Umformwerkzeug
- 6: Schabotte
- 7: weiteres Umformwerkzeug
- 8: Gestell
- 9: Maschinenkopf
- 10: Gravur
- 11: Führung
- 12: Maschinengrund
- 13: Schwingungsdämpfervorrichtung
- 14: Schwingungsdämpfer
- 15: Kontrolleinheit
- 16: Kontrollleitungen
- 17: Datenverarbeitungseinheit
- 18: Speicher
- 19: Sensoreinheit
- 20: Datenverbindungsleitung

- 202: Initiierung/Starten der initialen Bewegungsphase
- 204: Ermitteln der Geschwindigkeit
- 206: Ermitteln eines dynamischen Soll-Ansteuerparameter-Datensatzes
- 208: Bereitstellen von Ausgabedaten
- 210: Anwenden eines Soll-Ansteuerparameter-Datensatzes

- A: Ausgabedaten
- D: Ansteuerparameter-Datensatz
- E: Eingabedaten
- G: Geschwindigkeit
- N: trainiertes neuronales Netz
- S: Soll-Geschwindigkeit
- SD: Soll-Ansteuerparameter-Datensatzes
- W: Hubweg

## Patentansprüche

1. Computer-implementiertes Verfahren zur Steuerung oder Regelung einer Schlagausführung eines Umformschlags im Betrieb einer schlagenden Umformmaschine (1), wie Schmiedehammer, hydraulischer Hammer oder Gesenkschmiedehammer, zur schlagenden Umformung eines metallischen Werkstücks mittels einer Steuer- oder Regeleinheit (15), umfassend:
a) Bereitstellen eines Ist-Datensatzes (D) mit Ist-Betriebsdaten der Umformmaschine (1), wobei die Ist-Betriebsdaten (D) einen Ist-Betriebszustand der Umformmaschine (1) zu einem Betriebspunkt bei oder unmittelbar nach Initiierung der Schlagausführung durch die Steuer- oder Regeleinheit (15) beschreiben;
b) Übergabe des Ist-Datensatzes (D) als Eingabedaten (E) an ein trainiertes neuronales Netz (N), wobei das neuronale Netz (N)
- zumindest die Schlagausführung der Umformmaschine (1) modelliert,
- basierend auf einer Vielzahl von Trainingsdatensätzen trainiert ist, welche jeweils zumindest zu Betriebsdatentypen des Ist-Datensatzes (D) korrespondierende und aus Test- oder Regelbetrieb der Umformmaschine ermittelte Trainingsbetriebsdaten umfassen, und
- dazu eingerichtet ist, aus den Eingabedaten (E) zumindest einen Soll-Datensatz (SD) mit Soll-Betriebsdaten als Ausgabedaten (A) zu erzeugen;
c) Übergabe der Ausgabedaten (A) an die Steuer- oder Regeleinheit (15), und,
d) Steuern oder Regeln der weiteren Schlagausführung des Umformschlags durch die Steuer- oder Regeleinheit (15) anhand der Soll-Betriebsdaten des Soll-Datensatzes (SD).

2. Verfahren nach Anspruch 1, wobei die Steuer- oder Regeleinheit (15) die Schlagausführung basierend auf zumindest einem Steuerparameter oder Steuerparametersatz (D) initiiert.

3. Verfahren nach Anspruch 2, wobei die Ausgabedaten (A) zumindest einen Soll-Steuerparameter oder Soll-Steuerparametersatz (D) umfassen und die Steuer- oder Regeleinheit (15) zum Steuern oder Regeln der weiteren Schlagausführung anstelle des zumindest einen Steuerparameters oder Steuerparametersatzes (D) den zumindest einen Soll-Steuerparameter oder Soll-Steuerparametersatz (SD) anwendet.

4. Verfahren nach einem der vorangehenden Ansprüche, wobei die Steuer- oder Regeleinheit (15) wirkverbunden ist mit einem Aktuator (2) und der Aktuator (2) gekoppelt ist mit einem zur Werkstückumformung ausgebildeten Umformwerkzeug (5), wobei das Verfahren umfasst:
- Steuern oder Regeln eines Betriebs des Aktuators (2) durch die Steuer- oder Regeleinheit (15) zur Bewegungssteuerung oder -regelung des Umformwerkzeugs (5) für die weitere Schlagausführung anhand der Soll-Betriebsdaten (SD).

5. Verfahren nach einem der vorangehenden Ansprüche, wobei das Bereitstellen des den Betriebspunkt beschreibenden Ist-Datensatzes (D) umfasst:
- Erfassen (204) einer oder mehrerer, den Betriebspunkt charakterisierenden Ist-Betriebsgrößen (G) mittels eines oder mehreren Sensoren (19) und Integrieren der Ist-Betriebsgrößen (G) als Ist-Betriebsdaten in den Ist-Datensatz (D).

6. Verfahren nach einem der vorangehenden Ansprüche, wobei das Bereitstellen des den Betriebspunkt beschreibenden Ist-Datensatzes (D) umfasst:
- Ermitteln oder Bereitstellen von die Umformmaschine (1) charakterisierenden Stamm-, Konfigurations- oder Zustandsdaten und Integrieren der Stamm-, Konfigurations- oder Zustandsdaten als Ist-Betriebsdaten in den Ist-Datensatz.

7. Verfahren nach einem der vorangehenden Ansprüche, wobei das Bereitstellen des den Betriebspunkt beschreibenden Ist-Datensatzes umfasst:
- Ermitteln eines oder mehrerer, die Schlagausführung durch die Steuer- oder Regeleinheit (15) charakterisierenden Ist-Steuer- oder Regelparameter (D) und Integrieren der Ist-Steuer- oder Regelparameter als Ist-Betriebsdaten in den Ist-Datensatz.

8. Verfahren nach Anspruch 5, wobei zumindest eine der einen oder mehreren Ist-Betriebsgrößen ausgewählt ist aus der Gruppe: Position, Geschwindigkeit (G) und/oder Beschleunigung eines Umformwerkzeugs (5) der Umformmaschine (1) im Betriebspunkt, Temperatur und/oder Druck eines Arbeitsfluids eines zur Schlagausführung verwendeten hydraulischen Antriebs im Betriebspunkt, Speicherdruck eines hydraulischen Antriebs der Umformmaschine (1).

9. Verfahren nach Anspruch 6, wobei die einen oder mehreren Stamm-, Konfigurations- oder Zustandsdaten ausgewählt sind aus der Gruppe: Antriebsart, Maschinentemperatur, Verschleißzustand, maximale Schlagenergie, maximale Schlaghöhe, tatsächliche Schlaghöhe, Schlagfrequenz, Umformwerkzeuggewicht, Umformwerkzeugtyp, Werkstückart, Werkstückform, Werkstückmaterial, Werkstücktemperatur.

10. Verfahren nach Anspruch 7, wobei zumindest einer der Ist-Steuer- oder Regelparameter ausgewählt ist aus der Gruppe: Steuer- oder Regelparameter bei Initiierung der Schlagausführung, Zeitverlauf eines Steuer- oder Regelparameters zur Schlagausführung, Soll-Geschwindigkeit des Umformschlags, Soll-Energie des Umformschlags, Ansteuerdauer oder Ansteuerverlauf eines zur Beschleunigung des Umformwerkzeugs mit diesem gekoppelten Aktuator- oder Hydraulikeinheit.

11. Verfahren nach einem der vorangehenden Ansprüche, wobei die schlagende Umformmaschine (1) ein Gestell (8) mit daran angebrachten Komponenten zur Schlagausführung umfasst wobei das Gestell (8) an einem Untergrund (12) mittels einer Schwingungsdämpfervorrichtung (13) schwingungsgedämpft gelagert ist, wobei die Schwingungsdämpfervorrichtung (13) dazu eingerichtet ist, durch Umformschläge verursachte Schwingungen des Gestells (8) relativ zum Untergrund (12) zu dämpfen.

12. Computer-Programmprodukt umfassend einen nichtflüchtigen Speicher (18) mit darauf gespeicherten maschinenlesbaren Instruktionen, die bei Ausführung durch eine elektronische Steuer- oder Regeleinheit (15) ein Verfahren nach einem der Ansprüche 1 bis 11 bewirken.

13. Kontrolleinheit (15) eingerichtet zur Steuerung oder Regelung einer schlagenden Umformmaschine (1), wobei die Kontrolleinheit (15) einen oder mehrere Datenverarbeitungseinheiten (17), insbesondere Prozessoren, umfasst und einen nichtflüchtigen Speicher (18), auf welchem Instruktionen gespeichert sind, die bei Ausführung durch eine oder mehrere der Datenverarbeitungseinheiten (17), insbesondere Prozessoren, beim Betrieb der schlagenden Umformmaschine (1) ein Verfahren nach einem der Ansprüche 1 bis 11 bewirken.

14. Schlagende Umformmaschine (1), insbesondere Schmiedehammer, hydraulischer Hammer, oder Gesenkschmiedehammer, umfassend zumindest einen Aktuator (2) und zumindest ein mit dem Aktuator (2) gekoppeltes oder koppelbares und an einem Gestell (8) der Umformmaschine (1) beweglich angebrachtes Werkzeug (5) zur Werkstückumformung, und ferner eine Kontrolleinheit (15) nach Anspruch 13, die wirkverbunden ist mit dem Aktuator (2) zur Bewegungssteuerung oder -regelung des Umformwerkzeugs (5) durch den Aktuator (2) bei der Schlagausführung des Umformschlags zur Umformung eines metallischen Werkstücks.

15. Schlagende Umformmaschine (1) nach Anspruch 14, wobei der Aktuator (2) einen hydraulischen Linearaktor und einen mit dem Linearaktor über ein oder mehrere steuer- oder regelbare Hydraulikkomponenten hydraulisch wirkverbundenen Hydraulikkreis umfasst, wobei die Kontrolleinheit (15) wirkverbunden ist mit den ein oder mehreren Hydraulikkomponenten und dazu eingerichtet ist, bei Ausführung eines Verfahrens nach einem der Ansprüche 1 bis 11 die ein oder mehreren Hydraulikkomponenten zumindest für die Initiierung der Schlagausführung und die weitere Schlagausführung des Umformschlags anhand der Soll-Betriebsdaten (SD) zu steuern oder zu regeln.
